# EUROPEAN PATENT SPECIFICATION

(11) **EP 4 528 670 B1**
(45) Date of publication and mention of the grant of the patent: **25.02.2026**
(21) Application number: 23198305.7
(22) Date of filing: 19.09.2023
(51) Int. Cl.: G06V 10/776, G06V 20/64, G06V 10/82

(54) **METHOD AND SYSTEM FOR OBJECT RECOGNITION, ESTIMATION AND HANDLING**
VERFAHREN UND SYSTEM ZUR OBJEKTERKENNUNG, -SCHÄTZUNG UND -HANDHABUNG
PROCÉDÉ ET SYSTÈME DE RECONNAISSANCE, D'ESTIMATION ET DE GESTION D'OBJETS

(43) Date of publication of application: 26.03.2025
(73) Proprietor: Omron Europe B.V., 2132 JD Hoofddorp (NL)
(72) Inventor: Naser, Mohammad, 5234 GM s'Hertogenbosch (NL); Fayazbakhsh, Mahdi, 5234 GM s'Hertogenbosch (NL)
(74) Representative: HKW Intellectual Property PartG mbB

(56) References cited:
- CN-A- 113 183 156
- CN-A- 116 157 240
- US-A1- 2023 011 383

## Description

The present invention relates to a method for object recognition, estimation and handling. The present invention further relates to a corresponding system, to a sorting apparatus and to a server- or cloud-based system.

In the fast-paced landscape of modern industry, the efficient handling and organization of any kinds of objects and goods have become paramount. This has led to the development of automated sorting and palletizing systems that streamline operations and enhance productivity. For example, sorting and/or palletizing based on good and/or object-specific sorting algorithms is known.

Furthermore, CN 113 183 156 A discloses use of a digital twin model for the purpose of palletizing and/or sorting objects.

Additionally, according to the prior art document CN 116 157 240A, it is disclosed that object layer and/or packaging parameters may be entered at a user interface for generating parameters for controlling the packaging or palletizing of the respective objects.

Further prior art can be found in US 2023/011383 A1 disclosing a bulk sorting system for sorting objects in bulk.

Apart from the prior art, it is one object of the present invention to provide an improved method and or system for object recognition, estimation and handling.

According to a first aspect, a computer-implemented method, in particular for object recognition, estimation and handling is provided. The method includes:
classifying and/or identifying at least one object using a trained Convolutional Neural Network (CNN), particularly with transfer learning capabilities, the object having object properties associated with the object and being observable through a sensor device, the trained CNN outputting a classification result associated to the object and indicative of estimated object properties, wherein the object properties are at least one of a shape, a labelling, a weight, a dimension, a material of the object, (sub)components, a composition and a content;
identifying and/or selecting at least one sorting algorithm using at least one trained Artificial Intelligence (AI) algorithm, preferably being in conjunction with the CNN, based on the classification result of the at least one object;
verifying and/or validating the identified and/or selected at least one sorting algorithm using a digital twin model of a sorting apparatus;
sorting and palletizing the object (202, 204, 206) using a robot device (212) based on the selected sorting algorithm (308), wherein the sorting algorithm is used to optimize the sorting and palletizing of the respective objects.

The claimed method thus involves classifying and/or identifying objects using a trained Convolutional Neural Network (CNN) preferably with transfer learning capabilities. These objects may possess specific properties that can be observed through a sensor device. The CNN outputs a classification result associated with the object, which provides estimated object properties. These properties, in particular, encompass characteristics like shape, labeling, weight, dimensions, material composition, subcomponents, content, and more. The claimed method also entails identifying and/or selecting sorting algorithms through at least one trained Artificial Intelligence (AI) algorithm. The at least one AI algorithm is preferably used in conjunction with the CNN's classification result. The choice of sorting algorithms is preferably based on the outcomes of the CNN's object classification process. To ensure the reliability and effectiveness of the chosen sorting algorithm, the method further involves verifying and validating using a digital twin model of a sorting apparatus. A digital twin model is a virtual representation of the physical sorting apparatus, allowing for simulation and testing of algorithms in a controlled environment.

Advantageously, by utilizing the trained CNN for object recognition and estimation, the method improves the accuracy and efficiency of identifying various object properties such as shape, labeling, weight, and more. This leads to better handling and processing of objects within the sorting apparatus. The use of the at least one AI algorithm for sorting algorithm selection enables the system to adapt to different types of objects and their associated properties. This adaptability enhances the sorting apparatus's flexibility in handling a diverse range of objects. Furthermore, the ability to choose sorting algorithms based on the CNN's classification result ensures that the most appropriate sorting algorithm is selected for each specific object and/or handling task. This results in optimized sorting efficiency and reduced errors in the sorting process, thereby nonetheless preventing the to be sorted and/or handled objects from damage.

The integration of a digital twin model for algorithm verification provides a risk-free and economically favorable environment for testing sorting algorithms. Instead of testing a sorting algorithm with involvement of real objects to be sorted and/or handled, the sorting and/or handling can be simulated by the DT model for a wide variety of sorting algorithms. This minimizes the chances of errors or disruptions in the actual sorting process, contributing to operational reliability. For example, if a specific amount of objects should be staked and/or palletized on a pallet, the AI algorithm may output various different sorting algorithms for palletizing the specific amount of objects. The DT model then tests all different sorting algorithms and verifies and/or selects a certain sorting algorithm with which palletizing of the specific amount of objects on the pallet is performed in a predefined optimum manner, i.e. depending on a sorting time, a minimum packaging volume on the pallet after palletizing, a minimum amount of potentially damageable objects, and/or further predefined boundary criteria.

Through the method's comprehensive approach, resources and time are utilized efficiently. Object properties are estimated, suitable sorting algorithms are selected, and their performance is verified within a controlled simulation environment, all contributing to streamlined operations and reduced trial and error in the physical setup of the sorting apparatus. The claimed method also combines the strengths of Convolutional Neural Networks and Artificial Intelligence algorithms, leveraging their respective capabilities for accurate object recognition and algorithm selection. This synergy leads to a more robust and effective overall system.

A digital twin model preferably represents a virtual representation of a physical system, herein the sorting apparatus. It encompasses both the physical and digital aspects of the entity it represents, allowing for real-time monitoring, analysis, simulation, and/or interaction. The digital twin model preferably mirrors the behavior, characteristics, and/or functionalities of the sorting apparatus.

CNN is a specialized type of deep learning neural network architecture designed for processing and analyzing preferably visual data, such as images and/or videos. A CNN may be used for image recognition, object detection, image segmentation. A CNN may encompass the ability to automatically learn hierarchical features from raw pixel data or even from their signal representations. The architecture of the CNN may be chosen depending on the to be classified variety of objects. Such architectures may include VGG, ResNet, Inception, and more.

Depending on the complexity of the task, the architecture may have multiple convolutional layers, pooling layers, and fully connected layers.

Training of the Convolutional Neural Network (CNN) preferably involves presenting the CNN with a dataset containing labeled examples of input data (image or video data) along with their corresponding correct output labels (in this case object properties). The CNN learns to recognize patterns and/or features within the training data through a process of backpropagation and gradient descent, adjusting its internal parameters, namely weights and biases, to minimize the difference between its predictions and the true labels.

To provide the training data set, a dataset of images and/or videos related to the objects to be recognized and/or classified by the later in trained CNN may be gathered. The training data set preferably represents a large variety of objects and/or object properties. To increase the diversity of the training data and prevent overfitting of the CNN, techniques like rotation, scaling, cropping, and flipping to create variations of the original images and/or videos in the training data may be applied. This is known as data augmentation. The training process is followed by an initialization step where the weights and biases of the CNN are randomly initialized or pre-trained weights are used. Furthermore, the training may involve forward propagation, loss calculation, backpropagation and gradient descent, and hyperparameter tuning. The training may be performed iteratively. The training may be complemented by a validation of the training results, preferably performed after each iterative training phase.

Further object properties may be represented by at least one of a packaging of the object, a wrapping of the object, a box housing the object, a material of such a packaging, wrapping, or box. The packaging, wrapping, or box may be made from or comprise at least one of cartoon, wood, paper, plastic and textile. Further object properties may be at least one of a surface reflectance, an elasticity, a flexibility, a fragility, electromagnetic properties, a presence of a hazardous material, a visual pattern, an electromagnetic emission, age, wear, a biometric property, a rigidity, a pressure sensitivity, a presence of fluids, a time sensitivity, at least one optical property, a thermal conductivity, a biological property and a shape evolution. A surface reflectance may be represented by object properties, such as glossiness or matte finish. A surface reflectance may be an indicator for a prerequisite of careful handling of an object. Elasticity or flexibility of the object indicate that the object reacts differently when subjected to pressure or manipulation, which may be of importance when handling the object. Fragility of the object may be used as some objects are more fragile than others and require careful handling to prevent damage. Thus, such fragile objects may not be palletized beneath other object on a pallet, but instead on top of the pallet.

Electromagnetic properties of an objects may be a conductivity, a resistivity, or a dielectric constant. Such properties may be of importance when different objects are handled together. The presence of a hazardous material may be done based on a preferably visual footprint of a chemical, a biological, or radiological property of the object. Such a property may be of importance for safe handling of the object.

A visual pattern may be a logo or symbol on the object and may be used to aid in object identification. Electromagnetic emissions of an object may be detected for preventing interference with other objects. Age or wear properties may be useful for classifying the object as to be carefully handled (for example for antiquities) or not. Unique features, such as serial numbers, QR codes, or barcodes may be detected as object properties to enable object identification and/or classification.

In case of object handling involving living organisms, biometric properties may be detectable for recognizing biometric properties like fingerprints, iris patterns, or DNA sequences. A rigidity or hardness of an object may be used classifying the object for sorting and handling to avoid breakage or damage of the object.

Pressure sensitivity may be of importance as some objects, like fruits or the like, might exhibit pressure-sensitive behavior, like changes in shape or resistance when subjected to pressure. Thus, this might be considered when providing a sorting strategy for such objects. Presence of fluids, like liquids or gases, may be relevant for handling of the objects and for safety reasons. Time sensitivity of an object may be detected as an indicator recognizing how an object changes or degrades over time. This information may be used for handling the object in a specific way. Optical properties, like transparency, opacity, or polarization behavior may be used to classify the object and/or to decide on certain sorting criteria. Thermal conductivity of an object may be used when stacking or palletizing object to prevent or enhance an unwanted or wanted thermal conduction. Biological properties of an object may be recognized from visual data to help handling the object in a certain way. Shape evolution of an object may be of interest if on object changes its object's shape over time, for example, when heated or cooled down. This may be of importance during transport of the handled objects.

The Artificial Intelligence (AI) algorithm is preferably trained by a reinforcement learning training method. Such a reinforcement learning training method may be based on a training dataset that includes examples of objects with varying properties, sizes, and/or contents, along with corresponding information about the best sorting algorithms for those objects. Such a "best" sorting algorithm may be predefined based on historical information about handling and/or sorting the respective object, including damage history, transport history and the like.

Preferably, the training can include a preprocessing of the training data to remove any noise or inconsistencies and/or to ensure that the dataset is labeled correctly with the appropriate sorting algorithms assigned to each object. The training may further include extraction of relevant features from the objects in the dataset that can be used as input to the AI algorithm. Depending on the specific requirements of the AI model, this might involve techniques such as dimensionality reduction, image processing, or feature engineering. Preferably, the optionally preprocessed training dataset may be provided and/or divided in form of training and validation sets.

The training set may be used to teach the AI model, while the validation set may help monitor the model's performance and/or prevent overfitting. The training may further include to choose an appropriate AI model architecture that can effectively learn from the extracted features and make accurate decisions regarding the sorting algorithms. During training, the model preferably learns to map the extracted features to the best sorting algorithm for each object. The training may also involve model hyperparameter finetuning to optimize the AI model's performance and/or generalization capabilities on the validation set. Evaluation of the trained AI model's performance may be performed on a separate test dataset that was preferably not used during training. This step ensures that the model's performance is reliable and can generalize to unseen data. If the model's performance is not satisfactory, the training process, the data collection, the provision of training data and/or the model architecture may be iteratively adjusted, to improve the AI model's results. Once the at least one AI model performs well on the test dataset, it can be deployed in conjunction with the CNN for object recognition, estimation, handling and sorting in the sorting apparatus. The digital twin may then validate the generated sorting algorithm's effectiveness in real-world scenarios. Thereby, the step of "verifying/validating" preferably encompasses choosing or discarding specific sorting scenarios according to the "selected sorting algorithm". Of course multiple AI algorithms each having different weight configurations and/or model architectures may be trained in parallel or separate form one another.

According to an embodiment, the method further includes:
generating the at least one sorting algorithm as a function of the output of the trained CNN and the at least one trained AI algorithm.

The claim involves the process of deriving at least one sorting algorithm based on the output of a trained Convolutional Neural Network (CNN) and at least one trained Artificial Intelligence (AI) algorithm. In this context, the output of the trained CNN serves as an input for determining the sorting algorithm, and the trained AI algorithm(s) play a crucial role in said determination. In simpler terms, the claim outlines a method where the results obtained from a CNN, which is preferably specialized in recognizing and classifying object properties, are combined with features provided by the at least one AI algorithm. These AI algorithms have been trained to make informed decisions related to sorting processes. By leveraging the information from both the CNN and AI algorithms, the claim proposes a way to intelligently generate and/or select appropriate sorting algorithms tailored to the specific characteristics of the objects being handled.

According to a further embodiment, the trained CNN is implemented as a backbone network, and wherein the at least one trained AI algorithm is implemented as a head of the backbone network.

The CNN representing the backbone network preferably serves as the main framework or foundation network, responsible for processing and/or understanding the object properties. On top of this backbone network, the trained AI algorithm(s) is/are incorporated as a specialized component or top layer. This AI algorithm, or group of algorithms, operates at a higher level, making use of the features extracted by the CNN. This arrangement combines the strengths of both the CNN's recognition abilities and the AI algorithm's decision-making capabilities, resulting in a comprehensive and intelligent system for sorting and handling a large variety of objects.

According to a further embodiment, the trained CNN is implemented:
to receive a sensor signal output from at least one sensor device, preferably from an imaging device, the sensor signal being indicative of at least one object property; and
to generate the classification result by processing the received sensor signal, in particular comprising image- and/or video data indicative of the object property.

The trained CNN is preferably designed to accept input from one or more sensor devices. The preferred sensor device mentioned here is an imaging device, such as a camera or another optical sensor device. The sensor device generates a signal that may contain image and/or pixel information about at least one property of the object. The trained CNN processes the received sensor signal to produce a "classification result." This classification result is derived from the image and/or pixel information contained in the sensor signal. The sensor signal typically includes image and/or video data that provides indications about the property of the object being observed.

According to a further embodiment, classifying the at least one object comprises at least one of the steps of:
receiving, from a safety-light curtain (SLC) having a monitoring area, an SLC-sensor signal in response to the at least one object being within the detection area;
receiving, from a radar device, a radar-sensor signal based on the at least one object;
receiving, from a time-of-flight (ToF) measurement device, a ToF-sensor signal based on the at least one object;
receiving, from a camera device, a camera signal based on the at least one object captured by the camera device; and/or
receiving, from a balance device, a balance signal indicative of a weight of the at least one object;
wherein, in particular, the trained CNN is implemented to generate the classification result by processing the sensor signal, SLC-sensor signal, radar-sensor signal, camera signal, and/or balance signal.

In general, further sensor devices may be suitable to provide signals that may be received by the CNN. The trained CNN processes the signals and generates a classification result that indicates the object's identity and properties, drawing upon the combined information from at least one of the above-indicated sensor or from a diverse set of above-indicated sensors.

According to a further embodiment, the method further comprising outputting, from the trained CNN, the classification result as an object-specific code, the object-specific code containing information on the estimated object properties, preferably represented as object-specific box information, to the digital twin model.

"Outputting the Classification Result as an Object-Specific Code" preferably refers to that the trained CNN produces the classification result in the form of an "object-specific code." This code is a representation of the information obtained from the classification process. The object-specific code contains details about the estimated properties of the recognized object. It is structured in a way that allows for efficient storage and transmission of this information. The object-specific code is particularly organized to include "object-specific box information." This box information preferably denotes the boundaries or coordinates of a bounding box around the recognized object in an image. The object-specific box information preferably contributes to locating the identified object within its context and may be easy to process or to be provided for further data processing of the classification results.

According to a further embodiment, the method comprising:
using the digital twin model, verifying and/or validating the selected at least one sorting algorithm based on the object-specific code; and
providing the verified and/or selected at least one sorting algorithm to a system controller, wherein the system controller is implemented to control a sorting and palletizing process for the at least one object based on the provided sorting algorithm.

"Providing the verified and/or selected at least one sorting algorithm to the system controller" preferably refers to that after undergoing verification and/or validation within the digital twin model, the sorting algorithm's suitability is determined. The verified and/or selected sorting algorithm is then handed over to a "system controller." The system controller may be a component that manages and/or supervises the operation of a sorting and palletizing process. The system controller may be equipped to handle the sorting and palletizing process for the objects that require handling. The provided sorting algorithm, which has been verified and/or selected based on its performance in the digital twin model, may guide the actions of the system controller. The system controller may use the sorting algorithm to optimize the sorting and palletizing of the respective object(s).

According to a further embodiment, the method further includes:
validating and/or confirming the weight of the at least one object using a measurement of a force for carrying and/or moving the at least one object by the robot device.

Preferably after the verified and/or selected sorting algorithm is provided to the system controller, it is put into action for sorting and palletizing and/or handling the "object," which was identified and/or classified earlier in the process. This is preferably achieved by deploying a "robot device," which carries out the physical tasks of moving and/or arranging and/or handling the objects according to the selected sorting algorithm. As an optional part of the process, As part of the process, the weight of the at least one object may be assessed and/or confirmed (if virtually determined beforehand). This may be achieved by utilizing a "measurement of a force" while the robot device carries and/or moves the object. The robot device may apply a force to carry and/or manipulate the object in a certain and/or predefined manner. The force may be measured, and this force measurement may be used to infer the weight of the object. The inferred weight may be compared against the estimated and/or virtually assessed weight obtained from the object and/or object property classification.

According to a further embodiment, the trained CNN contains at least one of a Natural Language Processing, a Text Mining algorithm, at least one image analysis algorithm, at least one object detection algorithm to determine object properties, the at least one labelling, the weight, the at least one dimension and/or the content and/or at least one of the further above-indicated optional object properties.

NLP may allow the CNN to process and understand human language text. This could be used for analyzing textual descriptions of object and/or its properties. The CNN may incorporate a text mining algorithm. Text mining involves extracting information and/or patterns from textual data. This feature may be used to analyze textual information related to objects and/or their properties. Image analysis techniques may be used to extract graphical and/or visual information from images, to identify patterns and/or features. Object detection algorithms may be applied to locate objects within images. These algorithms may determine various properties of objects, such as shape and dimensions. Edge-detection algorithms and/or gray-value based algorithms may be used as object detection algorithms.

According to a further embodiment, identifying and/or selecting at least one sorting algorithm comprises:
using the at least one trained AI algorithm to determine the at least one sorting algorithm further based on at least one of delivery route information, delivery history information, metadata, at least one pallet information, at least one sorting and palletizing criterion; and/or
determining a score and/or goodness criterion for the at least one identified and/or selected sorting algorithm based on a sorting and palletizing simulation of the at least one object performed by the digital twin model.

The trained AI algorithm, thus, determines at least one suitable sorting algorithm based on various factors. These factors include, without limitation, delivery route information, historical data, metadata, pallet information, and sorting criteria. The selected algorithms may then be evaluated using a digital twin model, thereby performing a simulation of sorting and palletizing processes based on the selected algorithms. The outcome of the simulation may be used to assign scores or goodness criteria to the identified and/or selected sorting algorithms, helping to ensure effective and efficient sorting procedures in real-world scenarios.

The score and/or goodness criterion may be evaluated as a solution of a multi-objective optimization problem. For example, some of the sorting algorithms provided by the at least one AI algorithm may optimize a sorting time but may lack in other sorting criteria, such as object protection and/or damage limitation. For example, some sorting algorithms provided by the at least one AI algorithm may optimize a packaging volume achievable on a pallet, being important for certain transportation criteria and/or transportation settings, but may lack in other sorting criteria, such as object-specific stacking and/or handling. To evaluate and/or define the "best" or at least a "good" sorting algorithm, all of these different criteria may be weighed against one another to find an overall optimum. To do so, the score and/or goodness criterion may be evaluated based on a set of sorting and/or handling rules that may be object specific and that may be provided by a domain expert and/or that may be based on historical information of handling the respective objects.

According to a further embodiment, the method further includes:
changing the at least one identified and/or selected sorting algorithm using the at least one trained AI algorithm using reinforcement learning methods, wherein the at least one identified and/or selected sorting algorithm is changed until a predefined threshold for the score and/or goodness criterion or at least another termination criterion is reached.

The aim is to modify the sorting algorithms until they achieve a certain level of performance, as indicated by a score or goodness criterion. The process preferably continues until a predefined threshold for the criterion is met or another termination criterion is satisfied. This iterative approach ensures that the sorting algorithms are continually refined to meet and continuously improve desired performance standards.

According to a further embodiment, the digital twin model of the sorting apparatus is implemented to simulate the sorting and palletizing process and/or a de-sorting and de-palletizing process for the at least one object on a pallet according to at least one sorting algorithm.

The sorting algorithm may contain information for handling the object and/or its components regarding a variety of handling scenarios, for example packing and/or depacking and/or palletizing and/or reordering and/or dividing a charge of objects into parts. The sorting algorithm may contain information about decomposing and/or desorting of somehow combined objects and/or a, preferably fully, stacked pallet of objects.

According to a second aspect, a system for object recognition, estimation and handing is provided. The system comprising at least one data processing apparatus configured to run:
a trained Convolutional Neural Network (CNN), particularly with transfer learning capabilities, to classify and/or identify at least one object as a classification result, the object having object properties associated with the object and being observable through a sensor device, the classification result being associated to the object and indicative of estimated object properties, wherein the object properties are at least one of a shape, a labelling, a weight, a dimension and a content;
at least one trained Artificial Intelligence (AI) algorithm, preferably being in conjunction with the CNN, to identify and/or to select at least one sorting algorithm based on the classification result for the at least one object; and
a digital twin model of a sorting apparatus to verify and/or validate the identified and/or selected at least one sorting algorithm,
wherein the processing apparatus is configured to carry out the method of any one of the preceding claims.

The embodiments and features described with reference to the method of the first aspect apply mutatis mutandis to the system of the second aspect.

According to a third aspect, a sorting apparatus for sorting and palletizing at least one object, the sorting apparatus comprising:
at least one system of the second aspect and/or a data processing unit configured to perform a method of anyone of the claims and/or the aspects or embodiments disclosed above or below;
a robot device configured to sort and palletize at least one object on a pallet and/or an object carrier; and
a system controller configured to receive the verified and/or validated at least one sorting algorithm, and to control the robot device for sorting and palletizing of the at least one object based on the verified and/or validated sorting algorithm.

The system controller may be provided at the robot or may be provided in a robot's periphery. The system controller may be provided in a remote location, distant from the robot and may be configured to communicate with the robot via at least one wire connection or wirelessly. The robot may be configured in various way. The robot may be configured as a robot arm or a multi-armed robot. The robot may have up to three translatory degrees of freedom and/or up to three rotatory degrees of freedom. The robot may be adapted for multi-object handling. The robot may have an object-specific handling tool or multiple object-specific handling tools to be able to handle objects of different size, shape, weight and/or other object properties. The robot is explicitly configured to handle multiple different objects and/or to sort and/or desort multiple different objects. The object may thus be able to palletize or depalletize different objects on or from a pallet, wherein the robot uses control instructions that are based on the at least one sorting algorithm.

According to a fourth aspect, a server- or cloud-based system is provided, the server- or cloud-based system comprising:
a server or cloud configured to:
receive, from a system controller of a sorting apparatus, preferably from a remotely located, of a logistics agent, sensor data, in particular image- and/or video data, indicative of at least one object property of at least one object to be sorted and/or palletized;
carry out the method of any one of claims and/or the aspects or embodiments disclosed above or below for providing a verified and/or validated at least one sorting algorithm; and
send the verified and/or validated at least one sorting algorithm to the system controller of the sorting apparatus;
wherein the sorting apparatus is configured to sort and palletize the at least one object based on the sorting algorithm.

The system may comprise a "server" or a "cloud" component. This server or cloud is configured to perform several functions outlined as follows: The server or cloud receives "sensor data" from a "system controller" of a sorting apparatus. Of course, the server or cloud may receive sensor data from different system controllers of different sorting apparatuses at once and/or independently. This sensor data may include image and/or video data, which provide information about at least one property of at least one object that is intended to be sorted and/or palletized by a respective sorting apparatus. The server or cloud may be used, to perform a the above-indicated method as described in claims 4 to 12 for providing a verified and/or validated sorting algorithm based on the received sensor data. The sorting apparatus is equipped to sort and palletize and/or handle objects based on the received sorting algorithm.

The system's server- or cloud-based configuration enables remote operation and control. This is especially beneficial when sorting and palletizing processes are conducted across multiple locations and/or require centralized management. The utilization of trained CNNs and AI algorithms allows for real-time processing and decision-making based on sensor data. This reduces the need for manual intervention and speeds up the sorting process. By selecting sorting algorithms based on object-specific properties and predefined criteria, the system can optimize the use of resources such as time, space, and energy. The ability to simulate sorting and palletizing processes using a digital twin model allows for thorough testing and validation of algorithms. This leads to improved quality control and reduced chances of errors during actual sorting operations.

This aspect preferably expressly refers to "sharing" the AI-generated sorting strategy. Thus, the method steps performed by the server- or cloud-based system may be considered to be bookable and/or licensable as an additional "service".

The embodiments and features described with reference to the method of the first aspect and to the system of the second aspect apply mutatis mutandis to the sorting apparatus of the third aspect and the server- or cloud-based system of the fourth aspect.

According to a fifth aspect, a computer program product comprising instructions which, when the program is executed by a computer, cause the computer to carry out the method of the first aspect or of any embodiment of the first aspect, is provided.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic flow chart of the claimed method for object recognition, estimation and handling;
- Fig. 2: shows a schematic representation of an example of the claimed sorting apparatus together with an example of the claimed system;
- Fig. 3: shows a schematic block representation of an example of the claimed system;
- Fig. 4: shows an example of the classifying and/or identifying step S1 of Fig. 1;
- Fig. 5: shows an example of the identifying and/or selecting step S2 as well as the verifying and/or validating step S3 of Fig. 1;
- Fig. 6: shows an exemplary flow chart of an application of an sorting plan;
- Fig. 7: shows an exemplary flow chart of how a robot device handles an object based on a sorting plan; and
- Fig. 8: shows a schematic view of an example of a server- or cloud-based system.

In the Figures, like reference numerals designate like or functionally equivalent elements, unless otherwise indicated.

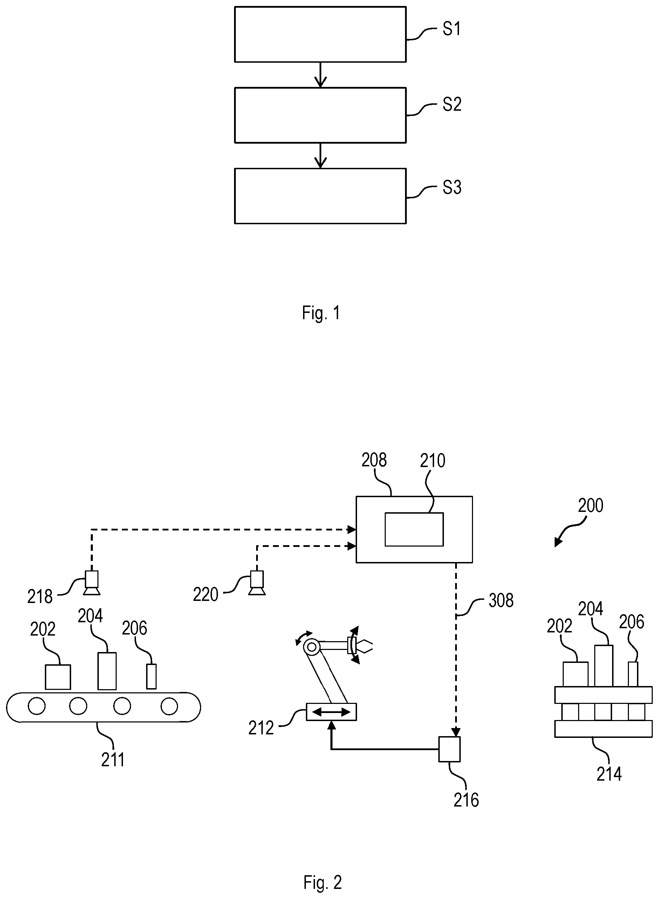

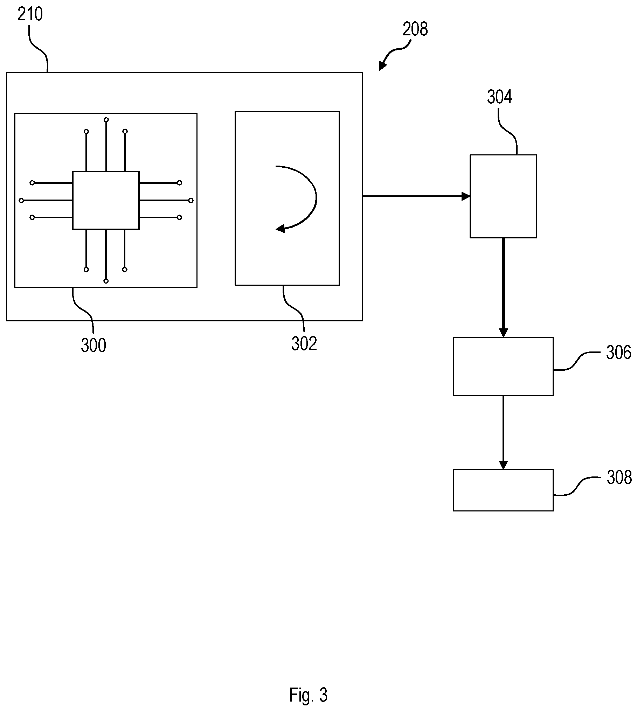

Fig. 1 shows a schematic flow chart of the claimed computer-implemented method for object recognition, estimation and handling. The claimed method can be performed on a computer device. The method will be explained by cross-referring to Figs. 2 and 3, wherein a schematic representation of an example of the claimed sorting apparatus together with an example of the claimed system is shown.

The sorting apparatus 200 for sorting and palletizing at least one object 202, 204, 206 comprises at least one system 208 and/or a data processing unit 210 configured to perform the claimed method according to anyone of its embodiments. According to Fig. 2, the data processing unit 210 is included in the system 208. In other embodiments, however, the data processing unit 210 may be spaced apart or may be configured as a stand-alone unit. Before sorting and/or handling and/or palletizing, the objects 202, 204, 206 may be placed on a conveyer belt 211, as schematically shown in Fig. 2. Such a conveyer belt 211 may be used to transport and/or carry the objects 202, 204, 206 before sorting and handling and/or palletizing. In other situations, the conveyer belt 211 may be used to transport and/or carry the objects 202, 204, 206 after desorting that may be done based on a verified and/or validated at least one sorting algorithm.

Furthermore, the sorting apparatus 200 comprises a robot device 212 configured to sort and palletize the at least one object 202, 204, 206 on a pallet 214 and/or an object carrier. The robot device 212 may be configured as a robot arm having at least one degree of freedom to move, indicated by two doubled arrows in Fig. 2.

The robot device 212 is controlled by a system controller 216 configured to receive a verified and/or validated at least one sorting algorithm. The system controller 216 controls the robot device 212 for sorting and palletizing of the at least one object 202, 204, 206 based on the verified and/or validated sorting algorithm.

In order to provide the verified and/or validated at least one sorting algorithm, the method schematically represented in Fig. 1 is performed.

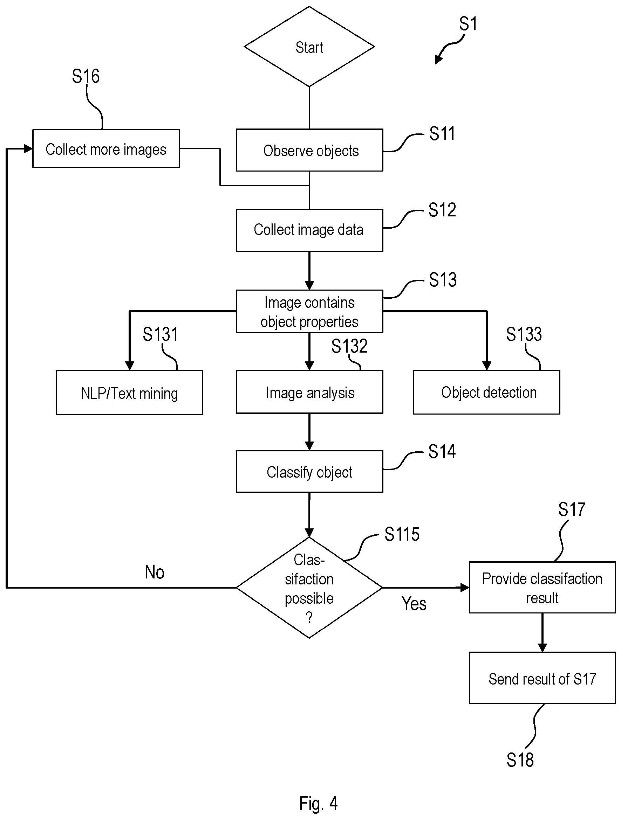

In a step S1, classifying and/or identifying the at least one object 202, 204, 206 is performed using a trained Convolutional Neural Network (CNN) 300 (see Fig. 3). The object 202, 204, 206 having object properties associated with the object 202, 204, 206 and being observable through at least one sensor device 218, 220. The at least one sensor device may be part of the sorting apparatus 200. The sensor devices 218, 220 may be represented as cameras. The trained CNN outputting a classification result associated to the object 202, 204, 206 and indicative of estimated object properties. The object properties are at least one of a shape, a labelling, a weight, a dimension, a material of the object, (sub-)components, a composition and a content. The trained CNN 300 may be implemented to receive a sensor signal output from the at least one sensor device 218, 220, wherein the sensor signal being indicative of at least one object property. The CNN 300 may be implemented to generate the classification result by processing the received sensor signal, in particular comprising image- and/or video data indicative of the object property. Such a data processing is exemplarily shown in Fig. 4.

In some embodiments that are not shown herein in more detail, the classifying the at least one object 202, 204, 206 comprises: receiving, from a safety-light curtain (SLC) having a monitoring area, an SLC-sensor signal in response to the at least one object 202, 204, 206 being within the detection area; receiving, from a radar device, a radar-sensor signal based on the at least one object 202, 204, 206; receiving, from a time-of-flight (ToF) measurement device, a ToF-sensor signal based on the at least one object 202, 204, 206; receiving, from a camera device, a camera signal based on the at least one object captured by the camera device; and/or receiving, from a balance device, a balance signal indicative of a weight of the at least one object 202, 204, 206. Preferably, the trained CNN 300 is implemented to generate the classification result by processing the sensor signal, SLC-sensor signal, radar-sensor signal, camera signal, and/or balance signal.

In a step S2, identifying and/or selecting at least one sorting algorithm 304 is performed using at least one trained Artificial Intelligence (AI) algorithm 302 based on the classification result of the at least one object 202, 204, 206. The at least one sorting algorithm 304 is preferably generated as a function of the output of the trained CNN 300 and the at least one trained AI algorithm 302. The trained CNN 300 may be implemented as a backbone network. The at least one trained AI algorithm 302 may be implemented as a head of said backbone / foundation network.

In a step S3, verifying and/or validating (S3) the identified and/or selected at least one sorting algorithm 304 is performed using a digital twin model 306 of the sorting apparatus 200. The verified and/or validated sorting algorithm is indicated with reference numeral 308.

Fig. 4 shows an example of the classifying and/or identifying step S1 in more detail, namely by showing potential but purely optional sub-steps of such a classifying and/or identifying step.

In an optional step S11, the at least one object 202, 204, 206 may be observed by the at least one image device 218, 220, preferably by several cameras. The at least one object 202, 204, 206 may be represented by at least one package that is about to be filled and/or palletized on the pallet 214.

The at least one image device 218, 220 preferably collects image data of each of the at least one object 202, 204, 206 in an optional step S12.

The collected image data of step S12 preferably contain at least one object property information that may be determined by the CNN 300 in step S13. The image data may contain information about at least one of a dimension of the object 202, 204, 206, a QR-Code, a bar code, a label, such as text information about a weight or the like. Also, further object properties may be contained in the collected image data.

For determination of the object properties, the trained CNN 300 may contain at least one of a Natural Language Processing, a Text Mining algorithm, at least one image analysis algorithm, at least one object detection algorithm to determine object properties, the at least one labelling, the weight, the at least one dimension and/or the content. Thus, the CNN 300 may use NLP and Text Mining algorithms to digest labels and/or text information contained in the image data as indicated by optional step S131. Also, the CNN 300 may use image analysis algorithms to digest images and detect dimensions and/or labels and/or a shape of the respective object 202, 204, 206, as indicated by optional step S132. The CNN 300 may use object detection algorithms to detect objects and/or their material composition from the image data, as indicated by optional step S133.

Based on the provided and/or generated and/or extracted image data-based information, in a step S14, the at least one object 202, 204, 206 is classified by the CNN 300. The information is preferably used as features and/or as feature vector representations by the CNN 300 for the classification.

In an optional step S15, a query might be implemented asking whether classification of the at least one object 202, 204, 206 was possible using the provided and/or generated and/or extracted image data-based information.

If classification was not possible (NO), more image data about the to be classified at least one object 202, 204, 206 may be collected in an optional step S16. Alternatively or additionally, additional information about the at least one object 202, 204, 206 may be provided by a domain expert or an system operator.

If the classification was possible (YES), the object classification information may be provided to the AI algorithm 302, as indicated by optional step S17. Said information may be provided in form of a generated report to be used for the AI algorithm 302 sorting planner. The classification result and/or the report may be output and/or provided as an object-specific code, the object-specific code containing information on the estimated object properties, preferably represented as object-specific box information, to the digital twin model 306. The report may be sent in optional step S18 to the AI algorithm 302 for identifying and/or selecting at least one sorting algorithm 304 in step S2.

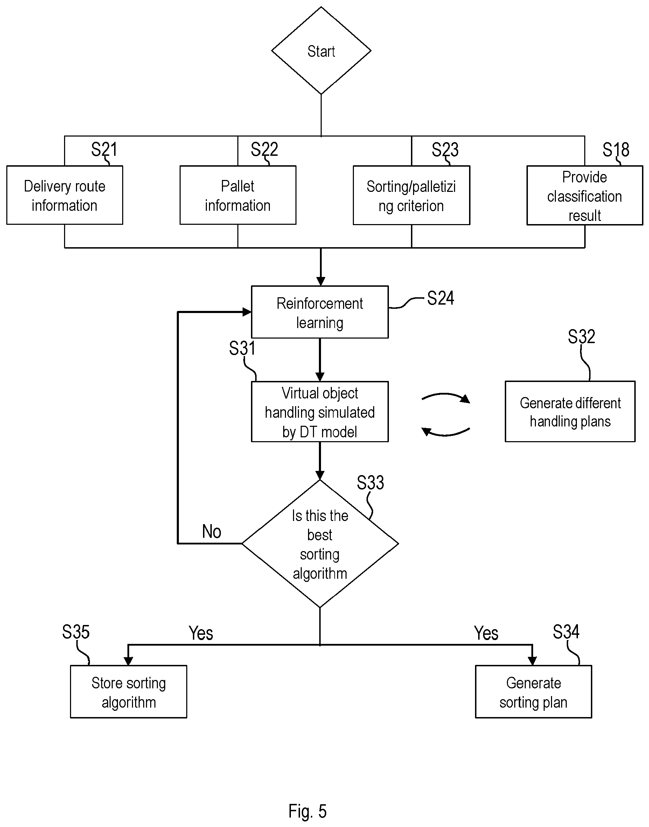

Fig. 5 shows an example of the steps S2 and S3 that are shown in more detail, namely by showing potential but purely optional sub-steps. As already subjected above, the step S2 of identifying and/or selecting the at least one sorting algorithm 304 is based on the classification result of the at least one object 202, 204, 206 which may be provided and/or sent to the AI algorithm 302 in optional step S18. For these reasons, step S18 is shown again in Fig. 5 as an input for performing step S2. Optionally, the step S2 of identifying and/or selecting the at least one sorting algorithm 304 comprises determining the at least one sorting algorithm 304 also further based on at least one of delivery route information, delivery history information, metadata, at least one pallet information, at least one sorting and palletizing criterion. As exemplarily shown in Fig. 5, such delivery route information, such pallet information and/or such sorting and palletizing criterion may be received by the AI algorithm 302 or provided to the AI algorithm in any suitable way. The reception / provision of such delivery route information, such pallet information and/or such sorting and palletizing criterion is indicated by optional steps S21, S22, S23. The delivery route information may be provided indicating a type of transportation, an environment information of the delivery and/or a duration of delivery. The pallet information may include dimensions, material type pallet, load dimensions and the like. The at least one sorting and palletizing criterion may provide information about criterial of good sorting, such as fragility based-sorting rules (i.e., fragile objects to be placed on the top of a pallet charge), dimension-based sorting rules (i.e., bigger objects to be placed at the bottom of the pallet) and/or weight based sorting rules (i.e., heavy objects to be placed at the bottom of the pallet).

The provided information are used in a reinforcement learning step S24 of the AI algorithm, wherein at the at least one sorting algorithm 304 is generated. The sorting algorithm may represent a sorting plan. Such a sorting plan, only for example, may define which object is to be handled first, which object is to be handled next, and/or an object-specific location of the object on the surface of the pallet 214 and/or another object carrier. The results in form of the at least one sorting algorithm 304 are sent to the DT model 306.

In an optional step S31, the DT model 306 may simulate handling of the at least one object 202, 204, 206 based on the provided sorting algorithm(s) 304, and preferably provide feedback and/or score value indicating a performance of the virtually performed object handling. The feedback and/or score value may depend on whether the at least one object is not damaged or displaced after sorting and whether a handling time is less than or similar to a predefined threshold.

Preferably, the DT model 306 generates different handling and/or palletizing plans (preferably 3D plans), as indicated by optional step S32 and simulates situations potentially occurring in transportation of the at least one object 202, 204, 206, such as shaking the pallet, test in different environment conditions, test in different transportation speeds of movements. The feedback and/or score value is preferably provided based on these multiple simulation results. In this way, a score and/or goodness criterion for the at least one identified and/or selected sorting algorithm 304 can be determined based on a sorting and palletizing simulation of the at least one object 202, 204, 206 performed by the digital twin model 306.

In an optional step S33, a query may be performed to determine the best sorting algorithm, preferably based on the respective score and/or goodness criterion.

If no sorting plan is favorable, the method may reperform the reinforcement learning step S24.

If a suitable sorting algorithm 308 for the at least one object 202, 204, 206 was determined, said sorting algorithm 308 may be used to generate a sorting plan, indicating how the objects 202, 204, 206 should be handled and/or sorted on a pallet. This is indicated by optional step S34.

Also, the determined sorting algorithm 308 and/or sorting plan may be stored in an optional step S35 in a storage unit. The sorting algorithm 308 and/or sorting plan may be stored together with transportation and/or depalletizing recommendations.

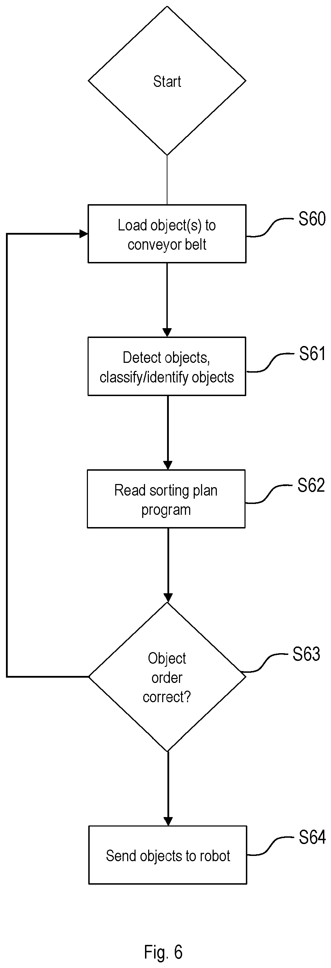

Fig. 6 shows an exemplary flow chart of an application of a sorting and ordering plan that is based on the identified and/or selected at least one sorting algorithm 308.

In an exemplary step S60, the objects 202, 204, 206, that may be represented by different packages, are load to the preferably circular conveyor belt 211 (see Fig. 2). The conveyer belt 211 is arranged such that its exit is accessible by the robot device 212.

In an exemplary step S61, the objects 202, 204, 206 are detected by at least one sensor device 218, 220 and subsequently classified and/or identified by the CNN. Thus, step S61 may include step S1.

In an exemplary step S62, a sorting and/or ordering plan program is read, for example by the data processing unit 210. Thereby, the steps S2 and S3 may be implemented as corresponding software instructions, that lead to identifying and/or selecting at least one sorting algorithm 304 using the at least one trained Artificial Intelligence, AI, algorithm 302 based on the classification result of the at least one object 202, 204, 206; and verifying and/or validating the identified and/or selected at least one sorting algorithm 304, 308 using the digital twin model 306 of the sorting apparatus 200.

In an exemplary step S63, a query is performed about whether an object order derivable form the sorting algorithm 308 is correct for sending it to the pallet 214. If the object order is incorrect (NO) the objects may be load in a different order to the conveyer belt 211, thus the methos may return to step S60.

If the object order is correct (YES), the objects 202, 204, 206 are send in a optional step S64 via the conveyor belt 211 to the robot 212 to be ordered on the pallet 214 based on the ordering plan derived from the at least one sorting algorithm 308.

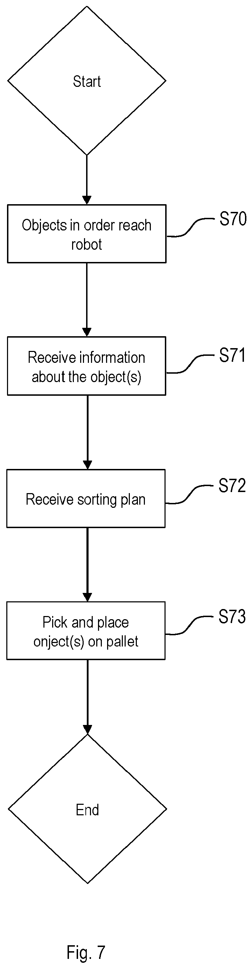

In Fig. 7 shows an exemplary flow chart of an application of a sorting and/or ordering plan that is based on the identified and/or selected at least one sorting algorithm 308 by the robot device 212.

In an optional step S70, the objects 202, 204, 206 to be palletized reach preferably in the order determined by the ordering plan 308 the robot device 212.

In an optional step S71, the robot device 212 and/or the system controller 216 receive information about the object 202, 204, 206, the information being preferably based on the object properties determined by the CNN 300 and/or based on further metadata information of the objects 202, 204, 206.

In an optional step S72, the robot device 212 and/or the system controller 216 receive the sorting plan that is based on the sorting algorithm 308.

In an optional step S73, the robot device 212 picks and/or places and/or moves the objects 202, 204, 206 on the pallet 214.

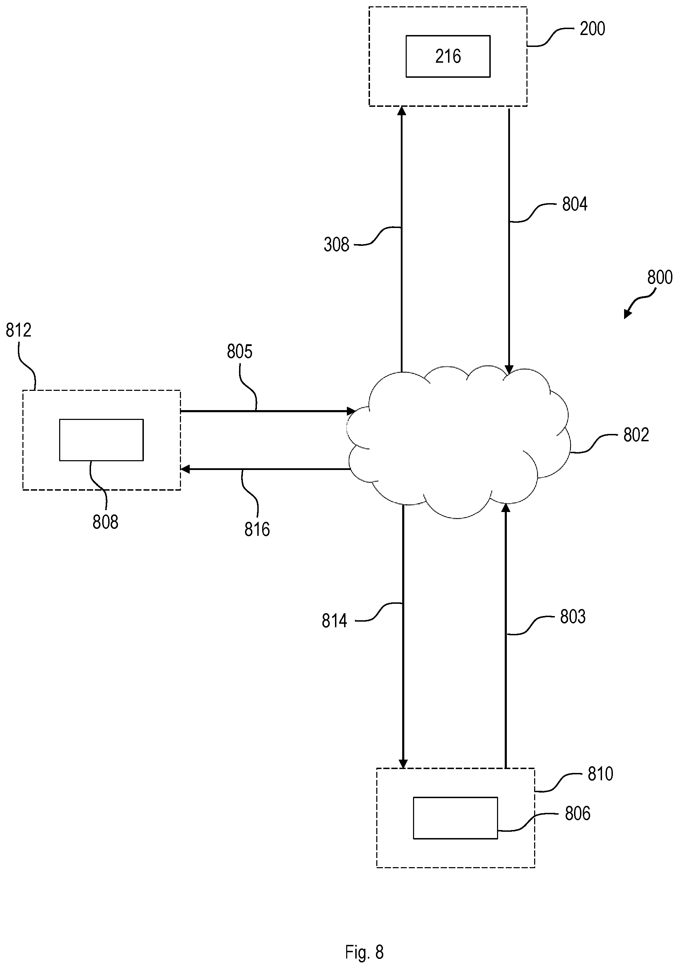

Fig. 8 shows a server- or cloud-based system 800 that comprises a server or cloud 802. The server or cloud 802 being configured to receive, from a system controller 208 of a sorting apparatus 200 sensor data 804, in particular image- and/or video data, indicative of at least one object property of at least one object 202, 204, 206 to be sorted and/or palletized. The system controller 208 is preferably remotely located and placed on a site of a logistics agent. The server or cloud 802 being configured to carry out at least the method of steps S1 to S3 for providing an object-specific verified and/or validated at least one sorting algorithm 308. The sorting algorithm 308 is sent back to the system controller 216 of the sorting apparatus 200. The sorting apparatus 200 is thereby configured to sort and palletize the at least one object 202, 204, 206 based on the remotely processed and/or determined sorting algorithm 308. The server or cloud 802 may be configured to process and/or calculate and/or provide different object-specific verified and/or validated at least one sorting algorithms 308, 803, 805 to different system controllers 208, 806, 808 of different sorting apparatuses 200, 810, 812. Of course, each system controller 806, 808 sends respective sensor data 814, 816 to the server or cloud 802.

### REFERENCE NUMERALS

- 200: sorting apparatus
- 202: object
- 204: object
- 206: object
- 208: system
- 210: data processing unit
- 211: conveyer belt
- 212: robot device
- 214: pallet
- 216: system controller
- 218: sensor device
- 220: sensor device
- 300: trained Convolutional Neural Network (CNN)
- 302: trained Artificial Intelligence (AI) algorithm
- 304: sorting algorithm
- 306: digital twin model
- 308: verified and/or validated sorting algorithm
- 800: server- or cloud-based system
- 802: server or cloud
- 803: sorting algorithm
- 804: sensor data
- 805: sorting algorithm
- 806: system controller
- 808: system controller
- 810: sorting apparatus
- 812: sorting apparatus
- 814: sensor data
- 816: sensor data

## Claims

1. A computer-implemented method, in particular for object recognition, estimation and handling, the method comprising:
classifying and/or identifying (S1) at least one object (202, 204, 206) using a trained Convolutional Neural Network, CNN, (300), particularly with transfer learning capabilities, the object (202, 204, 206) having object properties associated with the object (202, 204, 206) and being observable through a sensor device, the trained CNN (300) outputting a classification result associated to the object (202, 204, 206) and indicative of estimated object properties, wherein the object properties are at least one of a shape, a labelling, a weight, a dimension, a material of the object, (sub-)components, a composition and a content;
identifying and/or selecting (S2) at least one sorting algorithm (304) using at least one trained Artificial Intelligence, AI, algorithm (302), preferably being in conjunction with the CNN (300), based on the classification result of the at least one object (202, 204, 206);
verifying and/or validating (S3) the identified and/or selected at least one sorting algorithm (304, 308) using a digital twin model (306) of a sorting apparatus (200); and
sorting and palletizing the object (202, 204, 206) using a robot device (212) based on the selected sorting algorithm (308), wherein the sorting algorithm is used to optimize the sorting and palletizing of the respective objects.

2. The method of claim 1, further comprising:
generating the at least one sorting algorithm (304) as a function of the output of the trained CNN (300) and the at least one trained AI algorithm (302).

3. The method of claim 1 or 2, wherein the trained CNN (300) is implemented as a backbone network, and wherein the at least one trained AI algorithm (302) is implemented as a head of the backbone network.

4. The method of any one of the preceding claims, wherein the trained CNN (300) is implemented:
to receive a sensor signal output from at least one sensor device (218, 220), preferably from an imaging device (218, 220), the sensor signal being indicative of at least one object property; and
to generate the classification result by processing the received sensor signal, in particular comprising image- and/or video data indicative of the object property.

5. The method of any one of the preceding claims, wherein classifying the at least one object (202, 204, 206) comprises:
receiving, from a safety-light curtain, SLC, having a monitoring area, an SLC-sensor signal in response to the at least one object (202, 204, 206) being within the detection area;
receiving, from a radar device, a radar-sensor signal based on the at least one object (202, 204, 206);
receiving, from a time-of-flight, ToF, measurement device, a ToF-sensor signal based on the at least one object (202, 204, 206);
receiving, from a camera device, a camera signal based on the at least one object captured by the camera device; and/or
receiving, from a balance device, a balance signal indicative of a weight of the at least one object (202, 204, 206);
wherein, in particular, the trained CNN (300) is implemented to generate the classification result by processing the sensor signal, SLC-sensor signal, radar-sensor signal, camera signal, and/or balance signal.

6. The method of any one of the preceding claims, comprising:
outputting, from the trained CNN, the classification result as an object-specific code, the object-specific code containing information on the estimated object properties, preferably represented as object-specific box information, to the digital twin model.

7. The method of claim 6, comprising:
using the digital twin model (306), verifying and/or validating the selected at least one sorting algorithm (304) based on the object-specific code; and
providing the verified and/or selected at least one sorting algorithm (308) to a system controller (216), wherein the system controller (216) is implemented to control a sorting and palletizing process for the at least one object (202, 204, 206) based on the provided sorting algorithm (308).

8. The method of any one of the preceding claims, comprising:
validating and/or confirming the weight of the at least one object (202, 204, 206) using a measurement of a force for carrying and/or moving the at least one object (202, 204, 206) by the robot device (212).

9. The method of any one of the preceding claims, wherein the trained CNN (300) contains at least one of a Natural Language Processing, a Text Mining algorithm, at least one image analysis algorithm, at least one object detection algorithm to determine object properties, the at least one labelling, the weight, the at least one dimension and/or the content.

10. The method of any one of the preceding claims, wherein identifying and/or selecting at least one sorting algorithm (304) comprises:
using the at least one trained AI algorithm (302) to determine the at least one sorting algorithm (304) further based on at least one of delivery route information, delivery history information, metadata, at least one pallet information, at least one sorting and palletizing criterion; and/or
determining a score and/or goodness criterion for the at least one identified and/or selected sorting algorithm (304) based on a sorting and palletizing simulation of the at least one object (202, 204, 206) performed by the digital twin model (306).

11. The method of claim 10, comprising:
changing the at least one identified and/or selected sorting algorithm (304) using the at least one trained AI algorithm (302) using reinforcement learning methods, wherein the at least one identified and/or selected sorting algorithm (304) is changed until a predefined threshold for the score and/or goodness criterion or at least another termination criterion is reached.

12. The method of any one of the preceding claims, wherein the digital twin model (306) of the sorting apparatus (200) is implemented to simulate the sorting and palletizing process and/or a de-sorting and de-palletizing process for the at least one object (202, 204, 206) on a pallet (214) according to at least one sorting algorithm (308).

13. A system (208) for object recognition, estimation and handing, the system comprising at least one data processing apparatus (210) configured to run:
a trained Convolutional Neural Network, CNN, (300), particularly with transfer learning capabilities, to classify and/or identify at least one object (202, 204) as a classification result, the object (202, 204, 206) having object properties associated with the object (202, 204, 206) and being observable through a sensor device (218, 220), the classification result being associated to the object (202, 2β4, 206) and indicative of estimated object properties, wherein the object properties are at least one of a shape, a labelling, a weight, a dimension and a content;
at least one trained Artificial Intelligence, AI, algorithm (302), preferably being in conjunction with the CNN (300), to identify and/or to select at least one sorting algorithm (304) based on the classification result for the at least one object (202, 204, 206); and
a digital twin model (306) of a sorting apparatus (200) to verify and/or validate the identified and/or selected at least one sorting algorithm (304);
wherein the processing apparatus (200) is configured to carry out the method of any one of the preceding claims.

14. A sorting apparatus (200) for sorting and palletizing at least one object (202, 204, 206), the sorting apparatus (200) comprising:
at least one system (208) of claim 13 and/or a data processing unit (210) configured to perform a method of anyone of claims 1 to 12;
a robot device (212) configured to sort and palletize at least one object (202, 204, 206) on a pallet (214) and/or an object carrier; and
a system controller (216) configured to receive the verified and/or validated at least one sorting algorithm (304), and to control the robot device (212) for sorting and palletizing of the at least one object (202, 204, 206) based on the verified and/or validated sorting algorithm (308).

15. A server- or cloud-based system (800), the server- or cloud-based system (800) comprising:
a server or cloud (802) configured to:
receive, from a system controller (216, 806, 808) of a sorting apparatus (200, 810, 812), preferably from a remotely located, of a logistics agent, sensor data (804, 814, 816), in particular image- and/or video data, indicative of at least one object property of at least one object (202, 204, 206) to be sorted and palletized;
carry out the method of any one of claims 4 to 12 for providing a verified and/or validated at least one sorting algorithm (308, 803, 805); and
send the verified and/or validated at least one sorting algorithm (308, 803, 805) to the system controller (216, 806, 808) of the sorting apparatus (200, 810, 812);
wherein the sorting apparatus (200, 810, 812) is configured to sort and palletize the at least one object (202, 204, 206) based on the sorting algorithm (308, 803, 805).

## Patentansprüche

1. Computerimplementiertes Verfahren, insbesondere zur Objekterkennung, - schätzung und -handhabung, wobei das Verfahren Folgendes aufweist:
Klassifizieren und/oder Identifizieren (S1) mindestens eines Objekts (202, 204, 206) unter Verwendung eines trainierten neuronalen Faltungsnetzwerks, CNN, (300), insbesondere mit Transfer-Learning-Fähigkeiten, wobei das Objekt (202, 204, 206) Objekteigenschaften hat, die dem Objekt (202, 204, 206) zugeordnet sind und durch eine Sensorvorrichtung beobachtbar sind, wobei das trainierte CNN (300) ein Klassifizierungsergebnis ausgibt, das dem Objekt (202, 204, 206) zugeordnet ist und geschätzte Objekteigenschaften angibt, wobei die Objekteigenschaften mindestens eines von einer Form, einer Kennzeichnung, einem Gewicht, einer Abmessung, einem Material des Objekts, (Sub-)Komponenten, einer Zusammensetzung und einem Inhalt sind;
Identifizieren und/oder Auswählen (S2) mindestens eines Sortieralgorithmus (304) unter Verwendung mindestens eines trainierten Algorithmus künstlicher Intelligenz, AI, (302), der vorzugsweise in Verbindung mit dem CNN (300) ist, basierend auf dem Klassifizierungsergebnis des mindestens einen Objekts (202, 204, 206);
Verifizieren und/oder Validieren (S3) des identifizierten und/oder ausgewählten mindestens einen Sortieralgorithmus (304, 308) unter Verwendung eines digitalen Zwillingsmodells (306) einer Sortiervorrichtung (200); und
Sortieren und Palettieren des Objekts (202, 204, 206) unter Verwendung einer Robotervorrichtung (212) basierend auf dem ausgewählten Sortieralgorithmus (308), wobei der Sortieralgorithmus verwendet wird, um das Sortieren und Palettieren der jeweiligen Objekte zu optimieren.

2. Verfahren nach Anspruch 1, das ferner Folgendes aufweist:
Erzeugen des mindestens einen Sortieralgorithmus (304) als eine Funktion der Ausgabe des trainierten CNN (300) und des mindestens einen trainierten AI-Algorithmus (302).

3. Verfahren nach Anspruch 1 oder 2, wobei das trainierte CNN (300) als ein Backbone-Netzwerk implementiert ist, und wobei der mindestens eine trainierte AI-Algorithmus (302) als ein Kopf des Backbone-Netzwerks implementiert ist.

4. Verfahren nach einem der vorhergehenden Ansprüche, wobei das trainierte CNN (300) implementiert ist zum:
Empfangen einer Sensorsignalausgabe von mindestens einer Sensorvorrichtung (218, 220), vorzugsweise von einer Bildgebungsvorrichtung (218, 220), wobei das Sensorsignal mindestens eine Objekteigenschaft angibt; und
Erzeugen des Klassifizierungsergebnisses durch Verarbeiten des empfangenen Sensorsignals, das insbesondere Bild- und/oder Videodaten aufweist, die die Objekteigenschaft angeben.

5. Verfahren nach einem der vorhergehenden Ansprüche, wobei das Klassifizieren des mindestens einen Objekts (202, 204, 206) Folgendes aufweist:
Empfangen, von einem Sicherheitslichtvorhang, SLC, der einen Überwachungsbereich aufweist, eines SLC-Sensorsignals als Reaktion darauf, dass sich das mindestens eine Objekt (202, 204, 206) innerhalb des Detektionsbereichs befindet;
Empfangen, von einer Radarvorrichtung, eines Radarsensorsignals basierend auf dem mindestens einen Objekt (202, 204, 206);
Empfangen, von einer Laufzeitmessvorrichtung, ToF-Messvorrichtung, eines ToF-Sensorsignals basierend auf dem mindestens einen Objekt (202, 204, 206);
Empfangen, von einer Kameravorrichtung, eines Kamerasignals basierend auf dem mindestens einen Objekt, das von der Kameravorrichtung aufgenommen wird; und/oder
Empfangen, von einer Ausgleichsvorrichtung, eines Ausgleichssignals, das ein Gewicht des mindestens einen Objekts (202, 204, 206) angibt;
wobei insbesondere das trainierte CNN (300) implementiert ist zum Erzeugen des Klassifizierungsergebnisses durch Verarbeiten des Sensorsignals, SLC-Sensorsignals, Radarsensorsignals, Kamerasignals und/oder Ausgleichssignals.

6. Verfahren nach einem der vorhergehenden Ansprüche, das Folgendes aufweist:
Ausgeben, von dem trainierten CNN, des Klassifizierungsergebnisses als einen objektspezifischen Code, wobei der objektspezifische Code Informationen über die geschätzten Objekteigenschaften enthält, die vorzugsweise als objektspezifische Boxinformationen dargestellt sind, an das digitale Zwillingsmodell.

7. Verfahren nach Anspruch 6, das Folgendes aufweist:
unter Verwendung des digitalen Zwillingsmodells (306), Verifizieren und/oder Validieren des ausgewählten mindestens einen Sortieralgorithmus (304) basierend auf dem objektspezifischen Code; und
Bereitstellen des verifizierten und/oder ausgewählten mindestens einen Sortieralgorithmus (308) an eine Systemsteuerung (216), wobei die Systemsteuerung (216) implementiert ist, um einen Sortier- und Palettierprozess für das mindestens eine Objekt (202, 204, 206) basierend auf dem bereitgestellten Sortieralgorithmus (308) zu steuern.

8. Verfahren nach einem der vorhergehenden Ansprüche, das Folgendes aufweist:
Validieren und/oder Bestätigen des Gewichts des mindestens einen Objekts (202, 204, 206) unter Verwendung einer Messung einer Kraft zum Tragen und/oder Bewegen des mindestens einen Objekts (202, 204, 206) durch die Robotervorrichtung (212).

9. Verfahren nach einem der vorhergehenden Ansprüche, wobei das trainierte CNN (300) mindestens eines von einer natürlichen Sprachverarbeitung, einem Text-Mining-Algorithmus, mindestens einem Bildanalysealgorithmus, mindestens einem Objektdetektionsalgorithmus zum Bestimmen von Objekteigenschaften, der mindestens einen Kennzeichnung, dem Gewicht, der mindestens einen Abmessung und/oder dem Inhalt enthält.

10. Verfahren nach einem der vorhergehenden Ansprüche, wobei das Identifizieren und/oder Auswählen mindestens eines Sortieralgorithmus (304) Folgendes aufweist:
Verwenden des mindestens einen trainierten AI-Algorithmus (302), um den mindestens einen Sortieralgorithmus (304) ferner basierend auf mindestens einem von Lieferrouteninformationen, Lieferverlaufsinformationen, Metadaten, mindestens einer Paletteninformation, mindestens einem Sortier- und Palettierkriterium zu bestimmen; und/oder
Bestimmen eines Bewertungs- und/oder Gütekriteriums für den mindestens einen identifizierten und/oder ausgewählten Sortieralgorithmus (304) basierend auf einer Sortier- und Palettiersimulation des mindestens einen Objekts (202, 204, 206), die durch das digitale Zwillingsmodell (306) durchgeführt wird.

11. Verfahren nach Anspruch 10, das Folgendes aufweist:
Ändern des mindestens einen identifizierten und/oder ausgewählten Sortieralgorithmus (304) unter Verwendung des mindestens einen trainierten AI-Algorithmus (302) unter Verwendung von Verstärkungslernverfahren, wobei der mindestens eine identifizierte und/oder ausgewählte Sortieralgorithmus (304) geändert wird, bis ein vordefinierter Schwellenwert für das Bewertungs- und/oder Gütekriterium oder mindestens ein anderes Abbruchkriterium erreicht ist.

12. Verfahren nach einem der vorhergehenden Ansprüche, wobei das digitale Zwillingsmodell (306) der Sortiervorrichtung (200) implementiert ist, um den Sortier- und Palettierprozess und/oder einen Entsortier- und Entpalettierprozess für das mindestens eine Objekt (202, 204, 206) auf einer Palette (214) gemäß mindestens einem Sortieralgorithmus (308) zu simulieren.

13. System (208) zur Objekterkennung, -schätzung und -handhabung, wobei das System mindestens eine Datenverarbeitungsvorrichtung (210) aufweist, die eingerichtet ist, Folgendes auszuführen:
ein trainiertes neuronales Faltungsnetzwerk, CNN, (300), insbesondere mit Transfer-Learning-Fähigkeiten, um mindestens ein Objekt (202, 204) als ein Klassifizierungsergebnis zu klassifizieren und/oder zu identifizieren, wobei das Objekt (202, 204, 206) Objekteigenschaften hat, die dem Objekt (202, 204, 206) zugeordnet sind und durch eine Sensorvorrichtung (218, 220) beobachtbar sind, wobei das Klassifizierungsergebnis dem Objekt (202, 204, 206) zugeordnet ist und geschätzte Objekteigenschaften angibt, wobei die Objekteigenschaften mindestens eines von einer Form, einer Kennzeichnung, einem Gewicht, einer Abmessung und einem Inhalt sind;
mindestens einen trainierten Algorithmus künstlicher Intelligenz, AI, (302), der vorzugsweise in Verbindung mit dem CNN (300) ist, um mindestens einen Sortieralgorithmus (304) basierend auf dem Klassifizierungsergebnis für das mindestens eine Objekt (202, 204, 206) zu identifizieren und/oder auszuwählen; und
ein digitales Zwillingsmodell (306) einer Sortiervorrichtung (200), um den identifizierten und/oder ausgewählten mindestens einen Sortieralgorithmus (304) zu verifizieren und/oder zu validieren;
wobei die Verarbeitungsvorrichtung (200) eingerichtet ist, das Verfahren nach einem der vorhergehenden Ansprüche auszuführen.

14. Sortiervorrichtung (200) zum Sortieren und Palettieren mindestens eines Objekts (202, 204, 206), wobei die Sortiervorrichtung (200) Folgendes aufweist:
mindestens ein System (208) nach Anspruch 13 und/oder eine Datenverarbeitungseinheit (210), die eingerichtet ist, ein Verfahren nach einem der Ansprüche 1 bis 12 auszuführen;
eine Robotervorrichtung (212), die eingerichtet ist, mindestens ein Objekt (202, 204, 206) auf einer Palette (214) und/oder einem Objektträger zu sortieren und zu palettieren; und
eine Systemsteuerung (216), die eingerichtet ist, den verifizierten und/oder validierten mindestens einen Sortieralgorithmus (304) zu empfangen und die Robotervorrichtung (212) zum Sortieren und Palettieren des mindestens einen Objekts (202, 204, 206) basierend auf dem verifizierten und/oder validierten Sortieralgorithmus (308) zu steuern.

15. Server- oder Cloud-basiertes System (800), wobei das Server- oder Cloud-basierte System (800) Folgendes aufweist:
einen Server oder eine Cloud (802), der bzw. die eingerichtet ist, Folgendes auszuführen:
Empfangen, von einer Systemsteuerung (216, 806, 808) einer Sortiervorrichtung (200, 810, 812), vorzugsweise von einem entfernt angeordneten Logistikagenten, von Sensordaten (804, 814, 816), insbesondere Bild- und/oder Videodaten, die mindestens eine Objekteigenschaft mindestens eines zu sortierenden und zu palettierenden Objekts (202, 204, 206) angeben;
Ausführen des Verfahrens nach einem der Ansprüche 4 bis 12 zum Bereitstellen eines verifizierten und/oder validierten mindestens einen Sortieralgorithmus (308, 803, 805); und
Senden des verifizierten und/oder validierten mindestens einen Sortieralgorithmus (308, 803, 805) an die Systemsteuerung (216, 806, 808) der Sortiervorrichtung (200, 810, 812);
wobei die Sortiervorrichtung (200, 810, 812) eingerichtet ist, das mindestens eine Objekt (202, 204, 206) basierend auf dem Sortieralgorithmus (308, 803, 805) zu sortieren und zu palettieren.

## Revendications

1. Procédé mis en œuvre par ordinateur, en particulier pour la reconnaissance, l'estimation et la manipulation d'objets, le procédé comprenant :
la classification et/ou l'identification (S1) d'au moins un objet (202, 204, 206) à l'aide d'un réseau neuronal convolutif, CNN, entraîné (300), en particulier avec des capacités d'apprentissage par transfert, l'objet (202, 204, 206) ayant des propriétés d'objet associées à l'objet (202, 204, 206) et étant observable à travers un dispositif de capteur, le CNN entraîné (300) délivrant en sortie un résultat de classification associé à l'objet (202, 204, 206) et indicatif de propriétés d'objet estimées, dans lequel les propriétés d'objet sont au moins l'un parmi une forme, un étiquetage, un poids, une dimension, un matériau de l'objet, des (sous)composants, une composition et un contenu ;
l'identification et/ou la sélection (S2) d'au moins un algorithme de tri (304) à l'aide d'au moins un algorithme d'intelligence artificielle, AI, entraîné (302), de préférence en conjonction avec le CNN (300), sur la base du résultat de classification de l'au moins un objet (202, 204, 206) ;
la vérification et/ou la validation (S3) de l'au moins un algorithme de tri identifié et/ou sélectionné (304, 308) à l'aide d'un modèle jumeau numérique (306) d'un appareil de tri (200) ; et
le tri et la palettisation de l'objet (202, 204, 206) à l'aide d'un dispositif de robot (212) sur la base de l'algorithme de tri sélectionné (308), dans lequel l'algorithme de tri est utilisé pour optimiser le tri et la palettisation des objets respectifs.

2. Procédé selon la revendication 1, comprenant en outre :
la génération de l'au moins un algorithme de tri (304) en fonction de la sortie du CNN entraîné (300) et de l'au moins un algorithme AI entraîné (302).

3. Procédé selon la revendication 1 ou 2, dans lequel le CNN entraîné (300) est mis en œuvre en tant que réseau fédérateur, et dans lequel l'au moins un algorithme AI entraîné (302) est mis en œuvre en tant que tête du réseau fédérateur.

4. Procédé selon l'une quelconque des revendications précédentes, dans lequel le CNN entraîné (300) est mis en œuvre :
pour recevoir un signal de capteur délivré en sortie à partir d'au moins un dispositif de capteur (218, 220), de préférence à partir d'un dispositif d'imagerie (218, 220), le signal de capteur étant indicatif d'au moins une propriété d'objet ; et
pour générer le résultat de classification en traitant le signal de capteur reçu, comprenant en particulier des données d'image et/ou vidéo indicatives de la propriété d'objet.

5. Procédé selon l'une quelconque des revendications précédentes, dans lequel la classification de l'au moins un objet (202, 204, 206) comprend :
la réception, à partir d'un rideau lumineux de sécurité (SLC) ayant une zone de surveillance, d'un signal de capteur SLC en réponse au fait que l'au moins un objet (202, 204, 206) se trouve dans la zone de détection ;
la réception, à partir d'un dispositif radar, d'un signal de capteur radar sur la base de l'au moins un objet (202, 204, 206) ;
la réception, à partir d'un dispositif de mesure de temps de vol (ToF), d'un signal de capteur ToF sur la base de l'au moins un objet (202, 204, 206) ;
la réception, à partir d'un dispositif de caméra, d'un signal de caméra sur la base de l'au moins un objet capturé par le dispositif de caméra ; et/ou
la réception, à partir d'un dispositif d'équilibrage, d'un signal d'équilibrage indicatif d'un poids de l'au moins un objet (202, 204, 206) ;
dans lequel, en particulier, le CNN entraîné (300) est mis en œuvre pour générer le résultat de classification en traitant le signal de capteur, le signal de capteur SLC, le signal de capteur radar, le signal de caméra, et/ou le signal d'équilibrage.

6. Procédé selon l'une quelconque des revendications précédentes, comprenant :
la délivrance en sortie, à partir du CNN entraîné, du résultat de classification en tant que code spécifique à l'objet, le code spécifique à l'objet contenant des informations sur les propriétés d'objet estimées, de préférence représentées en tant qu'informations de boîte spécifique à l'objet, au modèle jumeau numérique.

7. Procédé selon la revendication 6, comprenant :
à l'aide du modèle jumeau numérique (306), la vérification et/ou la validation de l'au moins un algorithme de tri sélectionné (304) sur la base du code spécifique à l'objet ; et
la fourniture de l'au moins un algorithme de tri vérifié et/ou sélectionné (308) à un dispositif de commande de système (216), dans lequel le dispositif de commande de système (216) est mis en œuvre pour commander un processus de tri et de palettisation pour l'au moins un objet (202, 204, 206) sur la base de l'algorithme de tri fourni (308).

8. Procédé selon l'une quelconque des revendications précédentes, comprenant :
la validation et/ou la confirmation du poids de l'au moins un objet (202, 204, 206) à l'aide d'une mesure d'une force pour porter et/ou déplacer l'au moins un objet (202, 204, 206) par le dispositif de robot (212).

9. Procédé selon l'une quelconque des revendications précédentes, dans lequel le CNN entraîné (300) contient au moins l'un parmi un traitement en langage naturel, un algorithme d'exploration de texte, au moins un algorithme d'analyse d'image, au moins un algorithme de détection d'objet pour déterminer des propriétés d'objet, l'au moins un étiquetage, le poids, l'au moins une dimension et/ou le contenu.

10. Procédé selon l'une quelconque des revendications précédentes, dans lequel l'identification et/ou la sélection d'au moins un algorithme de tri (304) comprend :
l'utilisation de l'au moins un algorithme AI entraîné (302) pour déterminer l'au moins un algorithme de tri (304) en outre sur la base d'au moins l'une parmi des informations d'itinéraire de livraison, des informations d'historique de livraison, des métadonnées, au moins une information de palette, au moins un critère de tri et de palettisation ; et/ou
la détermination d'un score et/ou d'un critère de qualité pour l'au moins un algorithme de tri identifié et/ou sélectionné (304) sur la base d'une simulation de tri et de palettisation de l'au moins un objet (202, 204, 206) effectuée par le modèle jumeau numérique (306).

11. Procédé selon la revendication 10, comprenant :
le changement de l'au moins un algorithme de tri identifié et/ou sélectionné (304) à l'aide de l'au moins un algorithme AI entraîné (302) à l'aide de procédés d'apprentissage de renforcement, dans lequel l'au moins un algorithme de tri identifié et/ou sélectionné (304) est changé jusqu'à ce qu'un seuil prédéfini pour le score et/ou le critère de qualité ou au moins un autre critère de terminaison soit atteint.

12. Procédé selon l'une quelconque des revendications précédentes, dans lequel le modèle jumeau numérique (306) de l'appareil de tri (200) est mis en œuvre pour simuler le processus de tri et de palettisation et/ou un processus de détri et de dépalettisation pour l'au moins un objet (202, 204, 206) sur une palette (214) selon au moins un algorithme de tri (308).

13. Système (208) pour la reconnaissance, l'estimation et la manipulation d'objets, le système comprenant au moins un appareil de traitement de données (210) configuré pour exécuter :
un réseau neuronal convolutif, CNN, entraîné (300), en particulier avec des capacités d'apprentissage par transfert, pour classer et/ou identifier au moins un objet (202, 204) en tant que résultat de classification, l'objet (202, 204, 206) ayant des propriétés d'objet associées à l'objet (202, 204, 206) et étant observable à travers un dispositif de capteur (218, 220), le résultat de classification étant associé à l'objet (202, 204, 206) et indicatif de propriétés d'objet estimées, dans lequel les propriétés d'objet sont au moins l'un parmi une forme, un étiquetage, un poids, une dimension et un contenu ;
au moins un algorithme d'intelligence artificielle, AI, entraîné (302), de préférence en conjonction avec le CNN (300), pour identifier et/ou sélectionner au moins un algorithme de tri (304) sur la base du résultat de classification pour l'au moins un objet (202, 204, 206) ; et
un modèle jumeau numérique (306) d'un appareil de tri (200) pour vérifier et/ou valider l'au moins un algorithme de tri identifié et/ou sélectionné (304) ;
dans lequel l'appareil de traitement (200) est, en particulier, configuré pour réaliser le procédé selon l'une quelconque des revendications précédentes,
dans lequel l'appareil de tri (200) comprend un dispositif de robot (200) et est configuré pour trier et palettiser l'au moins un objet (202, 204, 206) à l'aide du dispositif de robot (212) sur la base de l'algorithme de tri sélectionné (308), et
dans lequel l'algorithme de tri est utilisé pour optimiser le tri et la palettisation de l'au moins un objet.

14. Appareil de tri (200) pour trier et palettiser au moins un objet (202, 204, 206), l'appareil de tri (200) comprenant :
au moins un système (208) selon la revendication 13 et/ou une unité de traitement de données (210) configurée pour réaliser un procédé selon l'une quelconque des revendications 1 à 12 ;
le dispositif de robot (212) configuré pour trier et palettiser au moins un objet (202, 204, 206) sur une palette (214) et/ou un porte-objet ; et
un dispositif de commande de système (216) configuré pour recevoir l'au moins un algorithme de tri vérifié et/ou validé (304), et pour commander le dispositif de robot (212) pour trier et palettiser l'au moins un objet (202, 204, 206) sur la base de l'algorithme de tri vérifié et/ou validé (308).

15. Système basé sur un serveur ou un nuage (800), le système basé sur un serveur ou un nuage (800) comprenant :
un serveur ou un nuage (802) configuré pour :
recevoir, à partir d'un dispositif de commande de système (216, 806, 808) d'un appareil de tri (200, 810, 812), de préférence à partir d'un agent logistique situé à distance, des données de capteur (804, 814, 816), en particulier des données d'image et/ou vidéo, indicatives d'au moins une propriété d'objet d'au moins un objet (202, 204, 206) à trier et palettiser ;
réaliser le procédé selon l'une quelconque des revendications 4 à 12 pour fournir un au moins un algorithme de tri vérifié et/ou validé (308, 803, 805) ; et
envoyer l'au moins un algorithme de tri vérifié et/ou validé (308, 803, 805) au dispositif de commande de système (216, 806, 808) de l'appareil de tri (200, 810, 812) ;
dans lequel l'appareil de tri (200, 810, 812) est configuré pour trier et palettiser l'au moins un objet (202, 204, 206) sur la base de l'algorithme de tri (308, 803, 805).
